# EUROPÄISCHE PATENTSCHRIFT

(11) **EP 2 611 619 B1**
(45) Veröffentlichungstag und Bekanntmachung des Hinweises auf die Patenterteilung: **01.03.2017**
(21) Anmeldenummer: 11721234.0
(22) Anmeldetag: 19.05.2011
(51) Int. Cl.: B41M 3/00, B41M 5/00

(54) **VERFAHREN ZUM BEDRUCKEN VON BEHÄLTERN SOWIE BEHÄLTER MIT WENIGSTENS EINEM AUFDRUCK ODER DRUCKBILD**
METHOD FOR DIGITALLY PRINTING CONTAINERS AND CONTAINER HAVING AT LEAST ONE PRINT OR PRINTED IMAGE
PROCÉDÉ D'IMPRESSION NUMÉRIQUE DE CONTENANTS ET CONTENANTS DOTÉS D'AU MOINS UNE IMPRESSION OU IMAGE D'IMPRESSION

(30) Priorität: 02.09.2010 DE 102010044243
(43) Veröffentlichungstag der Anmeldung: 10.07.2013
(73) Patentinhaber: KHS GmbH, 44143 Dortmund (DE)
(72) Erfinder: PRECKEL, Katrin, 45892 Gelsenkirchen (DE); SCHACH, Martin, 44799 Bochum (DE); REINIGER, Markus, 41238 Mönchengladbach (DE)
(86) Internationale Anmeldenummer: PCT/EP2011/002503
(87) Internationale Veröffentlichungsnummer: WO 2012/028216

(56) Entgegenhaltungen:
- GB-A- 2 242 397

## Beschreibung

Die Erfindung bezieht sich auf ein Verfahren gemäß Oberbegriff Patentanspruch 1 sowie auf einen Behälter gemäß Oberbegriff Patentanspruch 11.

"Behälter" sind im Sinne der Erfindung insbesondere Dosen, Flaschen, Tuben, Pouches aus Metall, Glas und/oder Kunststoff, aber auch andere Packmittel, die zum Abfüllen von flüssigen oder viskosen Produkten für ein Druckfüllen oder für ein druckloses Füllen geeignet sind.

Unter "Bedrucken" ist im Sinne der Erfindung ganz allgemein das Aufbringen eines oder mehrerer Druckbilder oder Aufdrucke, insbesondere auch mehrfarbiger Druckbilder oder Aufdrucke auf die jeweilige Behälteraußenfläche zu verstehen, und zwar unabhängig von speziellen Druckverfahren. Bevorzugt erfolgt das Bedrucken unter Verwendung von dem Fachmann bekannten, nach dem Inkjet-Verfahren arbeitenden Druckköpfen, die auch in der DE 10 2006 001 223 A1 beschrieben sind. Die Druckfarben oder Drucktinten werden dabei jeweils als feine Tröpfchen nebeneinander und einander auch teilweise überlappend aufgebracht, sodass sich insgesamt ein Mehrfarben-Druckbild ergibt, und zwar nach dem Trocknen oder Aushärten der Druckfarben in Form einer von dem Druckbild oder Aufdruck gebildeten Farb- oder Druckschicht. Für das Bedrucken der Behälter werden z.B. Druckfarben verwendet, die durch Energieeintrag, d.h. durch Wärme und/oder UV-Strahlung und/oder Mikrowellen-Strahlung und/oder Beta-Strahlung und/oder Elektronenstrahlen getrocknet bzw. ausgehärtet werden, vorzugsweise durch Vernetzen. Nachteilig hierbei ist, dass sich die jeweilige Druckschicht für das Recyceln nicht oder nur sehr schwer von den Behältern entfernen lässt, sofern wenn diese Schicht ansonsten eine hohe Haftfestigkeit während der Mindesthaltbarkeit des abgefüllten Produktes und eine hohe Licht-und Witterungsbeständigkeit aufweisen soll.

Um diesen Nachteil zu vermeiden, ist auch bereits bekannt (WO 2010/048119), das jeweilige Druckbild bzw. die Druckschicht auf eine zuvor auf der Behälteroberfläche aufgebrachten Zwischen- oder Basisschicht aufzudrucken, sodass sich zwar für die Druckschicht und die Zwischen- oder Basisschicht eine für den üblichen Gebrauch und für das übliche Handling der Behälter ausreichende Haftfestigkeit am Behälter ergibt, für den Recyclingprozess die Druckschicht aber zusammen mit der Zwischen- oder Basisschicht relativ problemlos von dem Behälter abgelöst werden kann. Hierfür wird vorgeschlagen, die Zwischen- oder Basisschicht ebenfalls in Form einer Vielzahl von sich zumindest teilweise überlappenden Tröpfchen aus dem die Zwischen- oder Basisschicht bildenden Material unmittelbar auf den Behälter aufzubringen und in dieser Form auszuhärten bzw. zu vernetzen, sodass die Zwischen- oder Basisschicht nur partiell an der Behälteraußenfläche haftet. Ein derartiges Verfahren ist aber zumindest zeitraubend und erfordert einen nicht erheblichen konstruktiven Aufwand. Die Druckschrift GB 2 242 397 A offenbart ein Verfahren zur Ausbildung einer Markierung auf einer Oberfläche eines Verpackungsmaterials. Auf dem Verpackungsmaterial ist eine erste Tintenschicht vorgesehen. Auf dieser ersten Tintenschicht ist eine weitere Tintenschicht aufgebracht, wobei diese aufgrund einer chemischen Reaktion fest miteinander verbunden sind. Auf der zweiten Tintenschicht ist eine weitere Tintenschicht angeordnet, die teilweise durch Hitzeeinwirkung zur Ausbildung der Markierung abgetragen wird.

Aufgabe der Erfindung ist es, ein Verfahren aufzuzeigen, welches den vorgenannten Nachteil vermeidet und dennoch ein problemloses Ablösen zumindest der Druckschicht von dem jeweiligen Behälter für den Recyclingprozess ermöglicht. Zur Lösung dieser Aufgabe ist ein Verfahren entsprechend dem Patentanspruch 1 ausgebildet Ein Behälter ist entsprechend dem Patentanspruch 11 ausgebildet.

Weiterbildungen, Vorteile und Anwendungsmöglichkeiten der Erfindung ergeben sich auch aus der nachfolgenden Beschreibung von Ausführungsbeispielen und aus den Figuren.

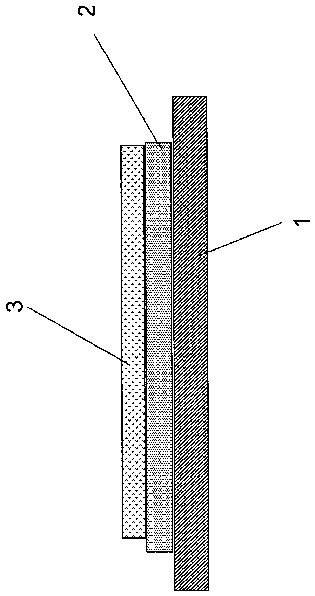

Die Erfindung wird im Folgenden anhand der Figur, die in vereinfachter Teildarstellung und im Schnitt ein von einer Behälterwandung gebildetes Substrat 1 mit Direktbedruckung zeigt, näher erläutert.

Das Substrat 1 ist bei der dargestellten Ausführungsform die Wandung eines Kunststoffbehälters oder einer Kunststoffflasche, vorzugsweise eines Kunststoffbehälters oder einer Kunststoffflasche aus PET. Auf die Außenfläche der Behälterwandung bzw. des Substrates 1 ist unmittelbar eine Zwischen- oder Basisschicht 2 aufgebracht. Diese ist auf ihrer dem Substrat 1 abgewandten Oberflächenseite mit einer von einem Mehrfarben-Druckbild gebildeten Farb- oder Druckschicht 3 versehen, welche mit einer geeigneten Drucktechnik unter Verwendung von Druckfarben oder Drucktinten unterschiedlicher Farbgebung erzeugt ist, beispielsweise unter Verwendung von nach dem Inkjet-Verfahren arbeitenden Druckköpfen. Im Einzelnen besteht das Druckbild bzw. die Druckschicht 3 aus einer Vielzahl von nebeneinander angeordneten und/oder sich teilweise überlappenden Tröpfchen oder Partikeln der verwendeten Druckfarben, die durch entsprechende Behandlung, beispielsweise durch Behandlung mit UV-Strahlung, Beta-Strahlung, Mikrowellenstrahlung, Wärmestrahlung usw. ausgehärtet bzw. vernetzt sind, insbesondere auch in der Weise, dass sie die insgesamt vernetzte Farb- oder Druckschicht 3 bilden.

Die Zwischen- oder Basisschicht 2 dient u.a. zur Verbesserung der Haftung der verwendeten Druckfarben an der jeweils zu bedruckenden Oberfläche und/oder zur Verbesserung der Benetzbarkeit dieser Oberfläche durch die Druckfarben. Grundsätzlich besteht aber auch die Möglichkeit, das Material für die Zwischen- oder Basisschicht 2 so zu gestalten bzw. zu wählen, dass hierdurch die Barriereeigenschaften des Substrates 1 bzw. eines Behälters gegenüber Gas, insbesondere gegenüber CO2 und/oder 02 wesentlich verbessert werden, wobei dann allerdings die gesamte Außenfläche des Substrates 1 bzw. eines Behälters mit der Zwischen- oder Basisschicht 2 versehen ist. Weiterhin kann das für die Zwischen- oder Basisschicht 2 verwendete Material so gestaltet oder gewählt sein, dass die Zwischen- oder Basisschicht 2 zumindest eine Migration der Druckfarben oder deren Bestandteile durch das Substrat 1 und damit in das Innere eines bedruckten Behälters verhindert.

Das Aufbringen der Zwischen- oder Basisschicht 2 kann auf unterschiedlichste Weise erfolgen, beispielsweise durch Tampondruck, durch Flexodruck, durch digitalen Inkjet-Druck, durch Aufsprühen, durch Aufwischen usw. Die Zwischen- oder Basisschicht 2 kann auch durch chemische und/oder physikalische Reaktionen auf dem Substrat erzeugt werden, beispielsweise durch PVD- und/oder CVD-Verfahren oder aber durch eine Silikatisierung der Außenfläche des Substrates 1 mit einem Flammpyrolyseverfahren, d.h. mit einem Verfahren, bei dem die Außenfläche des Substrates 1 unter Verwendung eines mit einem geeigneten Gas, beispielsweise mit Propan- und/oder Butan-Gas gespeisten Brenners in Anwesenheit einer siliziumorganischen Verbindung (Silan) als Precursor beflammt wird, sodass auf dem Substrat 1 als Zwischen- oder Basisschicht 2 eine sehr dichte amorphe Silikatschicht erzeugt wird. Dies bildet eine gut an dem Substrat 1 haftende Schicht mit hoher Oberflächenspannung und garantiert somit eine optimale Benetzung mit den verwendeten Druckfarben und damit eine optimale Qualität des jeweiligen Aufdrucks.

Besteht die Zwischen- oder Basisschicht 2 aus einem aushärtbaren Kunststoffmaterial, so erfolgt das Aushärten bzw. Vernetzen dieses Materials ebenfalls durch einen geeigneten Energieeintrag, beispielsweise durch UV-Strahlung, Beta-Strahlung, Mikrowellenstrahlung, Wärmestrahlung, Elektronenstrahlen usw., wobei dann, wenn das Substrat speziell aus einem transparenten Werkstoff oder Kunststoff, beispielsweise aus PET besteht, das Aushärten der Zwischen- oder Basisschicht 2 mit der UV-Strahlung auch durch das Substrat 1 hindurch möglich ist.

Insgesamt werden UV-Strahlungen mit längeren Wellenlängen weniger stark von Fluiden oder Feststoffen, z.B. PET, absorbiert, daher empfehlen sich längerwellige UV-Strahlungen, insbesondere im Bereich von 270 nm bis in den UV-A-Bereich hinein, wenn eine Aushärtung der Zwischen- oder Basisschicht 2 durch die Behälterwand oder durch eine darüber liegende Druckschicht hindurch erfolgen soll.Unabhängig davon, wie die Zwischen- oder Basisschicht 2 und die Druckschicht 3 im einzelnen erzeugt sind, ist die in der Figur dargestellte Schichtfolge so ausgeführt, dass allein aufgrund der verwendeten Werkstoffe und/oder deren Paarung und/oder deren Vernetzungsgrad die Haftfestigkeit bzw. die Haftungsraten zwischen dem Substrat 1 und der Zwischen- oder Basisschicht 2 unterschiedlich von der Haftfestigkeit bzw. den Haftungsraten zwischen der Zwischen- oder Basisschicht 2 und der Druckschicht 3 sind, um so während eines Recyclingprozesses zumindest die Druckschicht 3 von der übrigen Schichtfolge oder aber die Zwischen- oder Basisschicht 2 zusammen mit der Druckschicht 3 von dem Substrat 1 bzw. von dem entsprechenden Behälter ablösen zu können, wie dies nachfolgend noch näher beschrieben wird.

### Beispiel 1

Bei dieser Ausführungsform ist die Haftfestigkeit zwischen der Zwischen- oder Basisschicht 2 und dem Substrat 1 höher eingestellt als die Haftfestigkeit zwischen der Zwischen- oder Basisschicht 2 und der Druckschicht 3, d.h. die Haftfestigkeit zwischen dem Substrat 1 und der Zwischen- oder Basisschicht 2 weist beispielsweise nach der FINAT-Testmethode Nr. 21 wenigstens die Stufe "1" auf, während die Haftfestigkeit zwischen der Druckschicht 3 und der Zwischen- oder Basisschicht 2 nach dieser Testmethode der Stufe "2 - 3" entspricht, wobei gleichzeitig die Kohäsion bzw. Haftung innerhalb der Druckschicht 3 durch entsprechende Auswahl und Vernetzung der Druckfarben oder Drucktinten höher ist als die Adhäsion der Druckschicht 3 auf der Zwischen- oder Basisschicht 2. Letzteres wird z.B. dadurch erreicht, dass die Quervernetzung/Querhaftung innerhalb der Druckschicht 3 horizontal, d.h. in Achsrichtungen parallel zu den Oberflächenseiten des Substrates 1 größer ist als die Haftfestigkeit oder die Haftungsraten zwischen der Zwischen- oder Basisschicht 2 und der Druckschicht 3, und zwar vorzugsweise wenigstens um den Faktor 1,5 bis 2. Hierdurch ist es dann möglich, während des Recyclingprozesses die Druckschicht 3 problemlos von der Zwischen- oder Basisschicht 2 zu entfernen. Die Zwischen- oder Basisschicht 2 ist transparent und kann somit beim Recyceln am Substrat 1 bzw. an dem betreffenden Behälter verbleiben.

### Beispiel 2

Bei dieser Ausführungsform sind die Haftfestigkeiten oder Haftungsraten so eingestellt, dass die Haftfestigkeit zwischen der Zwischen- oder Basisschicht 2 und dem Substrat 1 die Stufe "2 - 3" der FINAT-Testmethode Nr. 21 erreicht, während für die Haftung oder Adhäsion der Druckschicht 3 auf der Zwischen- oder Basisschicht 2 eine wesentlich höhere Haftfestigkeit, nämlich eine Haftfestigkeit der Stufe "1" nach der FINAT-Testmethode Nr. 21 erzielt wird.

Während des Recyclingprozesses lässt sich bei dieser Ausführungsform die Druckschicht 3 zusammen mit der Zwischen- oder Basisschicht 2 problemlos vom Substrat 1 bzw. von dem betreffenden Behälter entfernen. Hierdurch besteht dann auch die Möglichkeit, dass das für die Zwischen- oder Basisschicht 2 verwendete Material farbig oder opak, beispielsweise opakweiß eingefärbt ist, ohne dass hierdurch der Recyclingprozess bzw. die Qualität des mit diesem Prozess erhaltenen Recyclingmaterials beeinträchtigt werden, welches wiederum zu Behältern verarbeitet wird. Zumindest die Zwischen- oder Basisschicht 2 ist dabei so ausgelegt, dass die Kohäsion bzw. Haftung innerhalb dieser Schicht größer ist als ihre Adhäsion auf dem Substrat 1.

Die Einstellung der Haftfestigkeiten sowie insbesondere auch der Haftung innerhalb der Zwischen- oder Basisschicht 2 und/oder der Druckschicht 3 wird dadurch erreicht, dass die Quervernetzung/Querhaftung innerhalb der Druckschicht 3 und/oder innerhalb der Zwischen- oder Basisschicht 2 größer ist als die Haftungsraten zwischen der Zwischen- oder Basisschicht 2 und dem Substrat 1. Hierdurch ist es möglich, die Druckschicht 3 und zumindest auch teilweise die Zwischen- oder Basisschicht 2 im Recyclingprozess von dem Substrat 1 zu trennen.

Bevorzugt ist die Quervernetzung/Querhaftung innerhalb der Druckschicht 3 größer als die Haftungsraten zwischen der Zwischen- oder Basisschicht 2 und dem Substrat 1 und auch größer als die Haftungsraten zwischen der Zwischen- oder Basisschicht 2 und der Druckschicht 3, und zwar vorzugsweise wenigstens um den Faktor 1,5 oder 2, wodurch wiederum ein Ablösen der Druckschicht 3 und ein zumindest teilweises Ablösen der Zwischen- oder Basisschicht 2 während des Recyclingprozesses erreicht werden.

Die Aushärtung oder Trocknung erfolgt dabei in bekannter Weise jeweils nach dem Aufbringen der Zwischen- oder Basisschicht 2 und der Druckschicht 3.

Bei einer Variante des Verfahrens werden Zwischen- oder Basisschicht 2 und Druckschicht 3 in einem Aushärtschritt vorgenommen. Dabei wird die Zwischen- oder Basisschicht 2 mit langwelligen UV-Strahlern, insbesondere UV-Strahler, welche UV-Strahlungen über 270 nm und länger aussenden, ausgehärtet. Die Photoinhibitoren der Schichten und die Leistung und/oder zeitliche Ansteuerung der UV-Lampen sind dabei derart aufeinander abgestimmt, dass die Aushärtung der Zwischen- oder Basisschicht 2 entweder mit einer höheren Leistung und/oder Strahlungsdichte erfolgt, als die der Druckschicht 3, oder die Aushärtung der Zwischen- oder Basisschicht 2 mit der jeweils besonders geeigneten UV-Strahlung zeitlich etwas vor der Aushärtung der Druckschicht 3 beginnt.

In einer weiteren Verfahrensvariante erfolgt die Bestrahlung von zwei Richtungen aus, nämlich durch einen radial außen angeordneten Strahler, der direkt auf die Druckschicht 3 in bekannter Art und Weise strahlt, und durch einen im Inneren des Behälters angeordneten Strahler, der durch das Substrat oder die Behälterwandung 1 hindurch auf die Zwischen- oder Basisschicht 2 einwirkt. Wie vorstehend beschrieben, weisen die Strahler in analoger und geeigneter Weise insbesondere unterschiedliche Wellenlänge und/oder Leistungen auf.

Das Ablösen der Druckschicht 3 und/oder der Zwischen- oder Basisschicht 2 während des Recyclingprozesses erfolgt generell beispielsweise durch mechanische Behandlung und/oder durch Waschen. Typische PET-Recycling-Prozesse für Lebensmittelanwendungen sind:
- Bühler (Super Dycle of Amcor)
- Erema (Vacurema)
- URRC (Cleanaway)
- Starlinger recoSTAR PET (used by FPR)
- Krones B2B (used by Roxanne)
- OHL Stehning
- Phoenix LNOc.

Das bei diesen Prozessen gewonnene Recyclingmaterial wird wieder zur Herstellung von Behältern für Lebensmittelanwendungen verwendet.

Um das Trennen der verschiedenen Materialien während des Recyclingprozesses zu erleichtern, besitzen zumindest die verwendeten Druckfarben beispielsweise eine Dichte, die derart kleiner ist als die Dichte des zu recycelnden Materials bzw. Kunststoffes, dass die von den Substraten 1 abgelösten Schichten (Druckschicht 3 und/oder Zwischen- oder Basisschicht 2) in einer während des Recyclingprozesses verwendeten Waschlösung aufschwimmen und damit durch Abschöpfen leicht von dem zu recycelnden Kunststoff bzw. von den zu recycelten Kunststoffflakes getrennt werden können.

Eine besondere Haftfestigkeit zwischen dem Substrat 1 und der Zwischen- oder Basisschicht 2 lässt sich auch dadurch erreichen, dass insbesondere bei transparenter Ausführung des Materials für das Substrat 1 eine Vernetzung der Zwischen- oder Basisschicht 2 durch das Substrat hindurch erfolgen kann.

Speziell dann, wenn die Zwischen- oder Basisschicht 2 aus einer Silikatschicht besteht, sind die Druckfarben so ausgelegt, dass die Kohäsion bzw. Haftung innerhalb der Druckschicht 3 größer ist als die Adhäsion der Druckschicht 3 auf der die Zwischen- oder Basisschicht 2. Letztere kann beim Recyceln nach dem Ablösen der Druckschicht 3 auf dem aus Kunststoff bestehenden Substrat 1 verbleiben, ohne dass dadurch der recycelte Kunststoff in optischen und/oder physikalischen Eigenschaften merklich verändert wird. Die Silikatschicht kann dabei entweder durch Flammpyrolyse oder durch andere PVD und CVD-Verfahren erzeugt bzw. abgeschieden werden.

### Bezugszeichenliste

- 1: Substrat oder Behälterwandung
- 2: Zwischen- oder Basisschicht
- 3: Druckbild oder Druckschicht

## Patentansprüche

1. Verfahren zum digitalen Bedrucken von Behältern durch Erzeugen eines eine Druckschicht (3) bildenden mehrfarbigen Druckbildes mittels eines Ink-Jetverfahrens auf eine Zwischen- oder Basisschicht (2), die unmittelbar an einer Außenfläche eines von einer Behälterwand gebildeten Substrates (1) aufgebracht wurde, wobei die Zwischen- oder Basisschicht (2) an ihrer von dem Substrat (1) abgewandten Oberflächenseite mit der Druckschicht (3) verbunden ist und wobei die Haftfestigkeit zwischen dem Substrat (1) und der Zwischen- oder Basisschicht (2) von der Haftfestigkeit zwischen der Zwischen- oder Basisschicht (2) und der Druckschicht (3) nach einer Aushärtung oder Trocknung unterschiedlich ist **dadurch gekennzeichnet, dass** die unterschiedlichen Haftfestigkeiten durch Wahl der Vernetzung der Zwischen- oder Basisschicht (2) und der Druckschicht (3) derart eingestellt werden, dass die Druckschicht (3) von der übrigen Schichtenfolge oder die Zwischen- oder Basisschicht (2) zusammen mit der Druckschicht (3) von dem Substrat (1) ablösbar ist.

2. Verfahren nach Anspruch 1, **dadurch gekennzeichnet, dass** die Haftfestigkeiten so eingestellt werden, dass die Haftfestigkeit zwischen der Zwischen- oder Basisschicht (2) und dem Substrat (1) größer ist als die Haftfestigkeit zwischen der Druckschicht (3) und der Zwischen- oder Basisschicht (2), und dass die Quervernetzung/Querhaftung der Druckschicht (3) größer ist als die Haftfestigkeit der Druckschicht (3) auf der Zwischen- oder Basisschicht (2).

3. Verfahren nach Anspruch 1, **dadurch gekennzeichnet, dass** die Haftfestigkeiten derart eingestellt werden, dass die Haftfestigkeit zwischen der Zwischen- oder Basisschicht (2) und dem Substrat kleiner ist als die Haftfestigkeit zwischen der Druckschicht (3) und der Zwischen- oder Basisschicht (2) und die Zwischen- oder Basisschicht (2) und/oder die Druckschicht (3) eine Quervernetzung/Querhaftung aufweist, die größer ist als die Haftfestigkeit der Zwischen- oder Basisschicht (2) auf dem Substrat (1).

4. Verfahren nach einem der vorhergehenden Ansprüche, **dadurch gekennzeichnet, dass** die Quervernetzung/Querhaftung innerhalb der Druckschicht (3) größer ist als die Haftfestigkeit zwischen der Druckschicht (3) und der Zwischen- oder Basisschicht (2).

5. Verfahren nach einem der vorhergehenden Ansprüche, **dadurch gekennzeichnet, dass** die Druckschicht (3) und/oder die Zwischen- oder Basisschicht (2) derart vernetzt werden, dass die Quervernetzung/Querhaftung innerhalb der Druckschicht (3) und/oder Zwischen- oder Basisschicht (2) größer ist als die Haftfestigkeit zwischen der Zwischen- oder Basisschicht (2) und dem Substrat (1).

6. Verfahren nach einem der vorhergehenden Ansprüche, **dadurch gekennzeichnet, dass** die Zwischen- oder Basisschicht (2) und die Druckschicht (3) derart vernetzt werden, dass die Quervernetzung/Querhaftung innerhalb der Druckschicht (3) größer ist als die Haftfestigkeit zwischen der Zwischen- oder Basisschicht (2) und dem Substrat (1) sowie auch größer ist als die Haftfestigkeit zwischen der Druckschicht (3) und der Zwischen- oder Basisschicht (2).

7. Verfahren nach einem der vorhergehenden Ansprüche, **dadurch gekennzeichnet, dass** die Druckschicht (3) und/oder die Zwischen- oder Basisschicht (2) aus einem durch Energieeintrag vernetzbaren Material bestehen.

8. Verfahren nach einem der vorhergehenden Ansprüche, **dadurch gekennzeichnet, dass** die Zwischen- oder Basisschicht (2) durch mechanisches Auftragen oder durch chemische oder physikalische Reaktion oder chemisches oder physikalisches Abscheiden oder durch Silikatisierung mit Flammpyrolyse erzeugt wird.

9. Verfahren nach eine der vorhergehenden Ansprüche, **dadurch gekennzeichnet, dass** für die Zwischen- oder Basisschicht (2) ein Material verwendet wird, welches Barriereeigenschaften gegenüber Gasen aufweist und/oder eine Migration der beim Erzeugen des Druckbildes bzw. der Druckschicht (3) verwendeten wenigstens eine Druckfarbe oder deren Bestandteile durch das Substrat (1) verhindert

10. Verfahren nach einem der vorhergehenden Ansprüche, **dadurch gekennzeichnet, dass** bei einer aus Kunststoff bestehenden, das Substrat (1) bildenden Behälterwandung das Vernetzen der Zwischen- oder Basisschicht (2) durch einen Energieeintrag durch das Substrat (1) hindurch erfolgt.

11. Behälter mit wenigstens einem Aufdruck oder mehrfarbigen Druckbild, welches als Druckschicht (3) durch durch digitales Bedrucken mittels eines Ink-Jetverfahrens auf einer Zwischen- oder Basisschicht (2) erzeugt ist, die unmittelbar an einer Außenfläche eines von einer Behälterwand gebildeten Substrates (1) aufgebracht ist, wobei die Zwischen- oder Basisschicht (2) an ihrer von dem Substrat (1) abgewandten Oberflächenseite mit der Druckschicht (3) verbunden ist und wobei die Haftfestigkeit zwischen dem Substrat (1) und der Zwischen- oder Basisschicht (2) von der Haftfestigkeit zwischen der Zwischen- oder Basisschicht (2) und der Druckschicht (3) nach einer Aushärtung oder Trocknung unterschiedlich ist, **dadurch gekennzeichnet, dass** die unterschiedlichen Haftfestigkeiten durch Wahl der Vernetzung der Zwischen- oder Basisschicht (2) und der Druckschicht (3) derart eingestellt sind, dass die Druckschicht (3) von der übrigen Schichtenfolge oder die Zwischen- oder Basisschicht (2) zusammen mit der Druckschicht (3) von dem Substrat (1) ablösbar ist.

12. Behälter nach Anspruch 11, **dadurch gekennzeichnet, dass** die Haftfestigkeiten so eingestellt sind, dass die Haftfestigkeit zwischen der Zwischen- oder Basisschicht (2) und dem Substrat (1) größer sind als die Haftfestigkeit zwischen der Druckschicht (3) und der Zwischen- oder Basisschicht (2), und dass die Quervernetzung/Querhaftung der Druckschicht (3) größer ist als die Haftfestigkeit der Druckschicht (3) auf der Zwischen- oder Basisschicht (2).

13. Behälter nach Anspruch 11, **dadurch gekennzeichnet, dass** die Haftfestigkeiten derart eingestellt sind, dass die Haftfestigkeit zwischen der Zwischen- oder Basisschicht (2) und dem Substrat kleiner ist als die Haftfestigkeit zwischen der Druckschicht (3) und der Zwischen- oder Basisschicht (2) und die Zwischen- oder Basisschicht (2) und/oder die Druckschicht (3) eine Quervernetzung/Querhaftung aufweist, die größer ist als die Haftfestigkeit der Zwischen- oder Basisschicht (2) auf dem Substrat (1).

14. Behälter nach einem der vorhergehenden Ansprüche, **dadurch gekennzeichnet, dass** die Quervernetzung/Querhaftung innerhalb der Druckschicht (3) größer ist als die Haftfestigkeit zwischen der Druckschicht (3) und der Zwischen- oder Basisschicht (2).

15. Behälter nach einem der vorhergehenden Ansprüche, **dadurch gekennzeichnet, dass** die Druckschicht (3) und/oder die Zwischen- oder Basisschicht (2) derart vernetzt sind, dass die Quervernetzung/Querhaftung innerhalb der Druckschicht (3) und/oder Zwischen- oder Basisschicht (2) größer ist als die Haftfestigkeit zwischen der Zwischen- oder Basisschicht (2) und dem Substrat (1).

16. Behälter nach einem der vorhergehenden Ansprüche, **dadurch gekennzeichnet, dass** die Zwischen- oder Basisschicht (2) und die Druckschicht (3) derart vernetzt sind, dass die Quervernetzung/Querhaftung innerhalb der Druckschicht (3) größer ist als die Haftfestigkeit zwischen der Zwischen- oder Basisschicht (2) und dem Substrat (1) sowie auch größer ist als die Haftfestigkeit zwischen der Druckschicht (3) und der Zwischen- oder Basisschicht (2).

17. Behälter nach eine der vorhergehenden Ansprüche, **dadurch gekennzeichnet, dass** die Zwischen- oder Basisschicht (2) aus einem Material besteht, welches Barriereeigenschaften gegenüber Gasen aufweist und/oder eine Migration der beim Erzeugen des Druckbildes bzw. der Druckschicht (3) verwendeten wenigstens eine Druckfarbe oder deren Bestandteile durch das Substrat (1) verhindert.

## Claims

1. Method for digitally printing containers by producing a multi-colour printed image, which forms a print layer (3) by means of an ink-jet method on an intermediate or base layer (2) that was applied to an outer surface of a substrate (1) formed by a container wall, wherein the intermediate or base layer (2) is connected on its surface side facing away from the substrate (1) to the print layer (3), and wherein the adhesion strength between the substrate (1) and the intermediate or base layer (2) differs from the adhesion strength between the intermediate or base layer (2) and the print layer (3) after curing or hardening, **characterised in that** the different adhesion strengths are adjusted by the selection of the cross-linking of the intermediate or base layer (2) and the print layer (3) in such a way that the print layer (3) can be detached from the other layer sequence or the intermediate or base layer (2) together with the print layer (3) can be detached from the substrate (1).

2. Method according to claim 1, **characterised in that** the adhesion strengths are adjusted in such a way that the adhesion strength between the intermediate or base layer (2) and the substrate (1) is greater than the adhesion strength between the print layer (3) and the intermediate or base layer (2), and that the cross-linking/cross-adhesion of the print layer (3) is greater than the adhesive strength of the print layer (3) on the intermediate or base layer (2).

3. Method according to claim 1, **characterised in that** the adhesion strengths are adjusted in such a way that the adhesive strength between the intermediate or base layer (2) and the substrate is less than the adhesive strength between the print layer (3) and the intermediate or base layer (2), and the intermediate or base layer (2) and/or the print layer (3) exhibits a cross-linking/cross-adhesion which is greater than the adhesive strength of the intermediate or base layer (2) on the substrate (1).

4. Method according to any one of the preceding claims, **characterised in that** the cross-linking/cross-adhesion inside the print layer (3) is greater than the adhesion strength between the print layer (3) and the intermediate or base layer (2).

5. Method according to any one of the preceding claims, **characterised in that** the print layer (3) and/or the intermediate or base layer (2) are cross-linked in such a way that the cross-linking/cross-adhesion inside the print layer (3) and/or the intermediate or base layer (2) is greater than the adhesion strength between the intermediate or base layer (2) and the substrate (1).

6. Method according to any one of the preceding claims, **characterised in that** the intermediate or base layer (2) and the print layer (3) are cross-linked in such a way that the cross-linking/cross-adhesion inside the print layer (3) is greater than the adhesion strength between the intermediate or base layer (2) and the substrate (1) as well as also greater than the adhesion strength between the print layer (3) and the intermediate or base layer (2).

7. Method according to any one of the preceding claims, **characterised in that** the print layer (3) and/or the intermediate or base layer (2) consist of a material which can be cross-linked by the application of energy.

8. Method according to any one of the preceding claims, **characterised in that** the intermediate or base layer (2) is produced by mechanical application or by chemical or physical reaction or chemical or physical separation or by silicatisation with flame pyrolysis.

9. Method according to any one of the preceding claims, **characterised in that** a material is used for the intermediate or base layer (2) which exhibits barrier properties against gases and/or prevents a migration of the at least one printing ink used during the production of the printed image or the print layer (3) respectively, or its constituents, through the substrate (1).

10. Method according to any one of the preceding claims, **characterised in that**, with a container wall consisting of plastic and forming the substrate (1), the cross-linking of the intermediate or base layer (2) takes place through the substrate (1) by an application of energy.

11. Container with at least one imprint or multi-coloured printed image, which is produced as a print layer (3) by digital printing by means of an ink-jet method on an intermediate or base layer (2), which is applied directly on an outer surface of a substrate (1) formed by a container wall, wherein the intermediate or base layer (2) is connected on its surface side facing away from the substrate (1) to the print layer (3), and wherein the adhesion strength between the substrate (1) and the intermediate or base layer (2) is different from the adhesion strength between the intermediate or base layer (2) and the print layer (3) after curing or hardening, **characterised in that** the different adhesion strengths are adjusted by the selection of the cross-linking of the intermediate or base layer (2) and the print layer (3) in such a way that the print layer (3) can be detached from the other layer sequence or the intermediate or base layer (2) together with the print layer (3) can be detached from the substrate (1).

12. Container according to claim 11, **characterised in that** the adhesion strengths are adjusted in such a way that the adhesion strength between the intermediate or base layer (2) and the substrate (1) is greater than the adhesion strength between the print layer (3) and the intermediate or base layer (2), and that the cross-linking/cross-adhesion of the print layer (3) is greater than the adhesion strength of the print layer (3) on the intermediate or base layer (2).

13. Container according to claim 11, **characterised in that** the adhesion strengths are adjusted in such a way that the adhesion strength between the intermediate or base layer (2) and the substrate is less than the adhesive strength between the print layer (3) and the intermediate or base layer (2), and the intermediate or base layer (2) and/or the print layer (3) exhibits a cross-linking/cross-adhesion which is greater than the adhesive strength of the intermediate or base layer (2) on the substrate (1).

14. Container according to any one of the preceding claims, **characterised in that** the cross-linking/cross-adhesion inside the print layer (3) is greater than the adhesion strength between the print layer (3) and the intermediate or base layer (2).

15. Container according to any one of the preceding claims, **characterised in that** the print layer (3) is cross-linked in such a way that the cross-linking/cross-adhesion inside the print layer (3) and/or the intermediate or base layer (2) is greater than the adhesion strength between the intermediate or base layer (2) and the substrate (1).

16. Container according to any one of the preceding claims, **characterised in that** the intermediate or base layer (2) and the print layer (3) are cross-linked in such a way that the cross-linking/cross-adhesion inside the print layer (3) is greater than the adhesion strength between the intermediate or base layer (2) and the substrate (1) as well as also greater than the adhesion strength between the print layer (3) and the intermediate or base layer (2).

17. Container according to any one of the preceding claims, **characterised in that** the intermediate or base layer (2) consists of a material which exhibits barrier properties against gases and/or prevents a migration of the at least one printing ink used during the production of the printed image or the print layer (3) respectively, or its constituents, through the substrate (1)

## Revendications

1. Procédé d'impression numérique de contenants par la production d'une image d'impression polychrome formant une couche d'impression (3) au moyen d'un procédé à jet d'encre sur une couche intermédiaire ou de base (2), qui a été appliquée directement sur une surface extérieure d'un substrat (1) formé par une paroi de contenant, dans lequel la couche intermédiaire ou de base (2) est reliée au niveau de son côté surface détourné du substrat (1) avec la couche d'impression (3) et dans lequel l'adhérence entre le substrat (1) et la couche intermédiaire ou de base (2) est différente de l'adhérence entre la couche intermédiaire ou de base (2) et la couche d'impression (3) après un durcissement ou un séchage, **caractérisé en ce que** les différentes adhérences sont réglées par la sélection de la réticulation de la couche intermédiaire ou de base (2) et de la couche d'impression (3) de telle sorte que la couche d'impression (3) est détachable de la succession de couches restante ou que la couche intermédiaire ou de base (2) est détachable du substrat (1) conjointement avec la couche d'impression (3).

2. Procédé selon la revendication 1, **caractérisé en ce que** les adhérences sont réglées de telle sorte que l'adhérence entre la couche intermédiaire ou de base (2) et le substrat (1) est supérieure à l'adhérence entre la couche d'impression (3) et la couche intermédiaire ou de base (2), et **en ce que** la réticulation transversale/l'adhérence transversale de la couche d'impression (3) est supérieure à l'adhérence de la couche d'impression (3) sur la couche intermédiaire ou de base (2).

3. Procédé selon la revendication 1, **caractérisé en ce que** les adhérences sont réglées de telle sorte que l'adhérence entre la couche intermédiaire ou de base (2) et le substrat est inférieure à l'adhérence entre la couche d'impression (3) et la couche intermédiaire ou de base (2) et que la couche intermédiaire ou de base (2) et/ou la couche d'impression (3) présente une réticulation transversale/adhérence transversale supérieure à l'adhérence de la couche intermédiaire ou de base (2) sur le substrat (1).

4. Procédé selon l'une des revendications précédentes, **caractérisé en ce que** la réticulation transversale/l'adhérence transversale à l'intérieur de la couche d'impression (3) est supérieure à l'adhérence entre la couche d'impression (3) et la couche intermédiaire ou de base (2).

5. Procédé selon l'une des revendications précédentes, **caractérisé en ce que** la couche d'impression (3) et/ou la couche intermédiaire ou de base (2) sont réticulées de telle sorte que la réticulation transversale/l'adhérence transversale à l'intérieur de la couche d'impression (3) et/ou de la couche intermédiaire ou de base (2) est supérieure à l'adhérence entre la couche intermédiaire ou de base (2) et le substrat (1).

6. Procédé selon l'une des revendications précédentes, **caractérisé en ce que** la couche intermédiaire ou de base (2) et la couche d'impression (3) sont réticulées de telle sorte que la réticulation transversale/l'adhérence transversale à l'intérieur de la couche d'impression (3) est supérieure à l'adhérence entre la couche intermédiaire ou de base (2) et le substrat (1) et est également supérieure à l'adhérence entre la couche d'impression (3) et la couche intermédiaire ou de base (2).

7. Procédé selon l'une des revendications précédentes, **caractérisé en ce que** la couche d'impression (3) et/ou la couche intermédiaire ou de base (2) se composent d'un matériau réticulable par apport d'énergie.

8. Procédé selon l'une des revendications précédentes, **caractérisé en ce que** la couche intermédiaire ou de base (2) est produite par application mécanique ou par réaction chimique ou physique ou dépôt chimique ou physique ou par silicatisation avec pyrolyse à la flamme.

9. Procédé selon l'une des revendications précédentes, **caractérisé en ce qu'**est utilisé pour la couche intermédiaire ou de base (2) un matériau qui présente des propriétés de barrière contre les gaz et/ou qui empêche une migration via le substrat (1) de l'au moins une encre d'impression, ou de ses composants, utilisée lors de la production de l'image d'impression ou de la couche d'impression (3).

10. Procédé selon l'une des revendications précédentes, **caractérisé en ce que** lorsque la paroi du contenant formant le substrat (1) se compose de plastique, la réticulation de la couche intermédiaire ou de base (2) a lieu par un apport d'énergie à travers le substrat (1).

11. Contenant avec au moins une impression ou une image d'impression polychrome qui est produite sous forme de couche d'impression (3) par impression numérique au moyen d'un procédé à jet d'encre sur une couche intermédiaire ou de base (2) qui est appliquée directement sur une surface extérieure d'un substrat (1) formé par une paroi de contenant, dans lequel la couche intermédiaire ou de base (2) est reliée au niveau de son côté surface détourné du substrat (1) avec la couche d'impression (3) et dans lequel l'adhérence entre le substrat (1) et la couche intermédiaire ou de base (2) est différente de l'adhérence entre la couche intermédiaire ou de base (2) et la couche d'impression (3) après un durcissement ou un séchage, **caractérisé en ce que** les différentes adhérences sont réglées par la sélection de la réticulation de la couche intermédiaire ou de base (2) et de la couche d'impression (3) de telle sorte que la couche d'impression (3) est détachable de la succession de couches restante ou que la couche intermédiaire ou de base (2) est détachable du substrat (1) conjointement avec la couche d'impression (3).

12. Contenant selon la revendication 11, **caractérisé en ce que** les adhérences sont réglées de telle sorte que l'adhérence entre la couche intermédiaire ou de base (2) et le substrat (1) sont supérieures à l'adhérence entre la couche d'impression (3) et la couche intermédiaire ou de base (2), et que la réticulation transversale/l'adhérence transversale de la couche d'impression (3) est supérieure à l'adhérence de la couche d'impression (3) sur la couche intermédiaire ou de base (2).

13. Contenant selon la revendication 11, **caractérisé en ce que** les adhérences sont réglées de telle sorte que l'adhérence entre la couche intermédiaire ou de base (2) et le substrat est inférieure à l'adhérence entre la couche d'impression (3) et la couche intermédiaire ou de base (2) et que la couche intermédiaire ou de base (2) et/ou la couche d'impression (3) présente une réticulation transversale/adhérence transversale qui est supérieure à l'adhérence de la couche intermédiaire ou de base (2) sur le substrat (1).

14. Contenant selon l'une des revendications précédentes, **caractérisé en ce que** la réticulation transversale/l'adhérence transversale à l'intérieur de la couche d'impression (3) est supérieure à l'adhérence entre la couche d'impression (3) et la couche intermédiaire ou de base (2).

15. Contenant selon l'une des revendications précédentes, **caractérisé en ce que** la couche d'impression (3) et/ou la couche intermédiaire ou de base (2) sont réticulées de telle sorte que la réticulation transversale/l'adhérence transversale à l'intérieur de la couche d'impression (3) et/ou de la couche intermédiaire ou de base (2) est supérieure à l'adhérence entre la couche intermédiaire ou de base (2) et le substrat (1).

16. Contenant selon l'une des revendications précédentes, **caractérisé en ce que** la couche intermédiaire ou de base (2) et la couche d'impression (3) sont réticulées de telle sorte que la réticulation transversale/l'adhérence transversale à l'intérieur de la couche d'impression (3) est supérieure à l'adhérence entre la couche intermédiaire ou de base (2) et le substrat (1) et est également supérieure à l'adhérence entre la couche d'impression (3) et la couche intermédiaire ou de base (2).

17. Contenant selon l'une des revendications précédentes, **caractérisé en ce que** la couche intermédiaire ou de base (2) se compose d'un matériau qui présente des propriétés de barrière contre les gaz et/ou qui empêche une migration via le substrat (1) de l'au moins une encre d'impression, ou de ses composants, utilisée lors de la production de l'image d'impression ou de la couche d'impression (3).
